# EUROPEAN PATENT APPLICATION

(11) **EP 3 547 286 A1**
(43) Date of publication of application: **02.10.2019**
(21) Application number: 17874832.3
(22) Date of filing: 03.08.2017
(51) Int. Cl.: G09B 9/00

(54) **SIMULATED TRAINING APPARATUS, METHOD AND SYSTEM FOR SECURITY CHECK**

(30) Priority: 24.11.2016 CN 201611052651
(71) Applicant: Nuctech Company Limited, Beijing 100084 (CN)
(72) Inventor: TIAN, Long, Beijing 100084 (CN); KANG, Chunfei, Beijing 100084 (CN); WANG, Tao, Beijing 100084 (CN)
(74) Representative: Boult Wade Tennant LLP
(86) International application number: PCT/CN2017/095849
(87) International publication number: WO 2018/095069

(57) **Abstract**

A security inspection simulating training apparatus (100, 302, 403), method and system (300, 400). The apparatus (100, 302, 403) comprises: a collecting unit (101), a processing unit (102), a receiving unit (103) and an analysis unit (104). The collecting unit (101) is configured to collect image data generated by the security inspection service system (301, 401) (S210); the processing unit (102) is configured to perform image data processing and analysis for the image data to obtain suspicious object image data indexing and/or obtain suspicious object image data according to manual labeling of the generated image data by the security inspection service system (S220); the receiving unit (103) is configured to receive suspicious object image data indexing and/or suspicious object image data regenerated in the simulating training process (S230); the analyzing unit (104) is configured to obtain the accuracy of the regenerated suspicious object image data indexing and/or suspicious object image data according to the suspicious object image data indexing and/or suspicious object image data and the regenerated suspicious object image data indexing and/or suspicious object image data (S240).

## Description

### TECHNICAL FIELD

The invention belongs to the technical field of security inspection, and particularly relates to a simulated training apparatus, method and system for security inspection.

### BACKGROUND

With the need to combat smuggling and security, the world is studying how to use more advanced technologies to protect social security and combat smuggling and terrorist crimes. What follows is that the requirements of the security inspector's professional skill are getting higher and higher. The training for security inspectors is mainly carried out through theoretical study/assessment, static image-based judgment ability learning/assessment, etc. There exists two problems: on the one hand, the materials, images, and operation interfaces that the security inspectors have contacted during the training phase are quite different from the actual environment. After the training, it takes a long time to adapt to the real operating environment; on the other hand, the security inspectors will encounter many typical cases in the actual work. In the existing environment, it need to undergo complicated operations and even cannot be used as content in the training materials.

### SUMMARY

Embodiments of the present invention provide a simulating training apparatus, method and system for security inspection.

In one aspect, an embodiment of the present invention provides a security inspection simulating training apparatus, including: a collecting unit, a processing unit, a receiving unit and an analysis unit. The collecting unit is configured to collect image data generated by the security inspection service system; the processing unit is configured to perform image data processing and analysis for the image data to obtain suspicious object image data indexing and/or obtain suspicious object image data according to manual labeling of the generated image data by the security inspection service system; the receiving unit is configured to receive suspicious object image data indexing and/or suspicious object image data regenerated in the simulating training process; the analyzing unit is configured to obtain the accuracy of the regenerated suspicious object image data indexing and/or suspicious object image data according to the suspicious object image data indexing and/or suspicious object image data and the regenerated suspicious object image data indexing and/or suspicious object image data.

In another aspect, an embodiment of the present invention provides a security inspection simulating training method, including: collecting image data generated by security inspection service system; performing image data processing and analysis for the image data to obtain suspicious object image data indexing and/or obtaining suspicious object image data according to manual labeling of the generated image data by the security inspection service system; receiving suspicious object image data indexing and/or suspicious object image data regenerated in the simulating training process; obtaining the accuracy of the regenerated suspicious object image data indexing and/or suspicious object image data according to the suspicious object image data indexing and/or suspicious object image data and the regenerated suspicious object image data indexing and/or suspicious object image data.

In still another aspect, an embodiment of the present invention provides a security inspection simulating training apparatus, including: a memory, a processor, an input device, an output device, an I/O interface, and a bus. The memory is for storing computer executable instructions; the processor is for executing a memory stored program, the program causing the processor to perform the security inspection simulating training method described above; a bus is for communicating information between the processor, the memory, the input device, the output device, and the I/O interface.

In another aspect, an embodiment of the present invention provides a security inspection simulating training system, including a security inspection service system and the above-mentioned security inspection simulating training apparatus which is installed in a security inspection terminal of the security inspection service system or is separated from the security inspection terminal.

The security inspection simulating training apparatus, method and system provided by the embodiments of the present invention can provide a security training environment that is very close to the actual security inspection working environment, and the security inspection training image data provided by the security inspection training apparatus is the actual image data in the actual security inspection work. And when the security inspector learns, exercises or tests, the security inspection training system will automatically analyze and give the accuracy of the student's image determining, which is convenient for the assessment and evaluation before the student is on the job, and after the security inspector complete the training, the security inspector can seamlessly switch to the working environment, which saves the training time and improves the quality of training.

### BRIEF DESCRIPTION OF THE DRAWINGS

The features and advantages of the present invention will be more clearly understood from the description of the appended drawings.
FIG. 1 shows a block diagram of a security inspection simulating training apparatus in accordance with an embodiment;
FIG. 2 shows a flow chart of a security inspection simulating training method in accordance with an embodiment;
FIG. 3 is a block diagram showing the structure of a security inspection simulating training system in accordance with an embodiment;
FIG. 4 is a block diagram showing the structure of a security inspection simulating training system according to another embodiment;
FIG. 5 is a schematic diagram showing an actual application interface of a security inspection simulating training system according to an embodiment;
FIG. 6 is a schematic diagram showing an actual application interface of a security inspection simulating training system according to another embodiment;
FIG. 7 shows a block diagram of a security inspection simulating training apparatus in accordance with an embodiment.

### DETAILED DESCRIPTION

The technical solutions in the embodiments of the present invention will be described below in conjunction with the accompanying drawings in the embodiments of the present invention.

Features and exemplary embodiments of various aspects of the invention are described in detail below. In the following detailed description, numerous specific details are set forth. It will be apparent to those skilled in the art, however, that the invention may be practiced without some of these details. The following description of the embodiments is merely to provide a better understanding of the invention. The present invention is in no way limited to any specific configurations and algorithms set forth below, but without departing from the spirit and scope of the invention. In the drawings and the following description, well-known structures and techniques are not shown in order to avoid unnecessary obscuring the invention.

Example embodiments will now be described more fully with reference to the accompanying drawings. However, the example embodiments can be embodied in a variety of forms and should not be construed as being limited to the embodiments set forth herein; rather, these embodiments are provided to make the present invention more comprehensive and complete, and fully convey the concept of the example embodiments. It will be given to those skilled in the art. In the figures, the thickness of the regions and layers may be exaggerated for clarity. The same reference numerals in the drawings denote the same or similar structures, and thus their detailed description will be omitted.

Furthermore, the described features, structures, or characteristics may be combined in any suitable manner in one or more embodiments. In the following description, numerous specific details are set forth However, those skilled in the art will appreciate that the technical solution of the present invention may be practiced without one or more of the specific details, or other methods, components, materials, and the like may be employed. In other instances, well-known structures, materials, or operations are not shown or described in detail to avoid obscuring the main technical idea of the invention. It should be noted that the features of the embodiments and embodiments of the present application, without conflict, Can be combined with each other.

The security inspection simulating training apparatus, method and system according to an embodiment of the present invention are described in detail below with reference to the accompanying drawings.

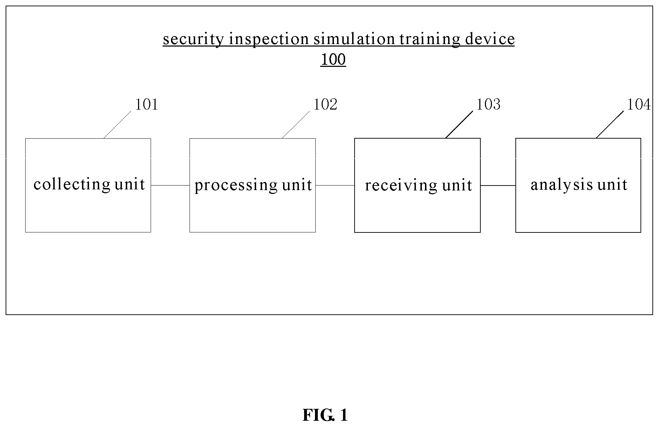

FIG. 1 shows a block diagram of a security inspection simulating training apparatus in accordance with an embodiment. The security inspection simulating training apparatus includes a collection unit 101, a processing unit 102, a receiving unit 103, and an analysis unit 104. The collection unit 101 is configured to collect image data generated by the security inspection service system. The security inspection service system herein can be understood as a system for security inspector to work daily, and can generally include security inspection equipment, supporting network systems, server systems, and security inspection diagram decision terminals. The security inspection diagram decision terminal herein can be understood as a terminal device that is used by the security inspector to perform daily operations, for example, an operation terminal of a security inspection X-ray machine capable of collecting X-ray image data. The processing unit 102 may be configured to perform image data processing and analysis according to image data to obtain suspicious object image data indexing, or may be configured to obtain suspicious object image data according to manual labeling of the generated image data by the security inspection service system, and it can also be configured as a combination of the above two units for obtaining suspicious image data. It should be understood that the suspicious object image data obtained by the processing unit 102 described above can be used as the answer data inside the security inspection simulating training apparatus when the student learns, exercises, and tests. It should be understood that the foregoing processing unit 102 can be used as two generating units of the answer data in the security inspection simulating training system, and one is to process and analyze the collected image data to obtain suspicious image data indexing by using an existing image data processing method or device. The image data processing method herein may be based on Adaboost learning algorithm, Boosting Tree learning algorithm, SVM, and the like. The Adaboost learning algorithm can combine some weak classification methods together and combine into a new strong classification method to obtain the suspicious image data more accurately. The Boosting Tree learning algorithm is an improved AdaBoost method and has good performance in data filtering and classification; SVM (support vector machine) can also classify and identify image data and identify suspicious image data. The other processing unit 102 adopts a manual manner, for example, a security inspection professional and a training teacher perform labeling according to the collected image data to obtain suspicious image data. In one example, the processing unit 102 is further configured to obtain the suspicious object image data index according to the manual labeling of the generated image data manually by the security inspection service system, which is different from the foregoing manual labeling to obtain the suspicious object image data. The foregoing suspicious object image data may be identification data such as the name and type of the suspicious object input to the processing unit after manual identification, and the suspicious object data indexing may be a suspicious object image data indexing such as position indexing capable of identifying the suspicious object image data in the entire image data material. The receiving unit 103 is configured to receive the suspicious object image data indexing and/or the suspicious object image data regenerated by the simulating training process, which can be understood as receiving the answer data which is provided by the security inspection students during the study, practice or examination. The analyzing unit 104 is configured to obtain the regenerated suspicious object image data indexing and/or the accuracy of the suspicious image data according to the suspicious object image data indexing and/or the suspicious object image data and the regenerated suspicious object image data indexing and/or the suspicious object image data. The analyzing unit 104 can be understood as: comparing the answer data generated by the foregoing different processing units and the answer data provided by the student to obtain the accuracy of the student answering the question, for example, the score of the student answering the question, error rate, assessment results, etc. The method of analysis may be, for example, determining whether data such as the name and type of the suspicious object are identical or determining the degree of coincidence of the position index of the suspicious object image data. The device can provide a security inspection training environment that is very close to the actual security inspection working environment, and the security inspection training image data provided by the security inspection training apparatus is the actual image data in the actual security inspection work, and when the security inspector learns, exercises or tests, The security inspection training system will automatically analyze and give the accuracy of the student's image determining, so that the security inspector can seamlessly switch to the working environment after completing the training, which saves training time and improves the quality of the training.

In one embodiment, the collecting unit 101 of the apparatus may also be configured to collect image data which is manually edited. It should be understood that the image material library for the training of the security inspector can be directly imported from the business image library generated during the work. It is also possible for the security inspection training teacher to compose and synthesize the image material online or offline, and then generate new image data to make the security inspection training material more diversified. In one example, the apparatus further includes the pre-processing unit configured to edit the image data generated by the security inspection service system to generate new image data. It should be understood that the material can also be automatically processed by the apparatus to generate new image data material for training.

In one embodiment, the apparatus further includes an associated identification generating unit that can be configured to add an associated identification to the accuracy obtained by the analysis unit 104. It should be understood that, after the student obtains the accuracy of the answer through the study, the practice or the test, the associated identification generating unit adds a corresponding associated identification to the accuracy data, and the associated identification corresponds to the accuracy data through one-to-one. In one example, the apparatus may further include a query unit configured to query the accuracy obtained by the analysis unit 104 according to the associated identification; the apparatus may further include a statistics unit configured to count the accuracy obtained by the analysis unit 104 according to the associated identification. It can be understood that the accuracy generated by the student after study, practice or examination each time, such as the answer score, the associated identification generating unit will associate the identification with each score, and generate the associated identification information, and the associated identification information can not only include the student's answer scores, but also contain other information about the student, such as name, student number, class, etc., so that the apparatus can also provide detailed basic data for the evaluation and statistics of subsequent student score or overall score, which facilitate the classification, assessment and management of the students.

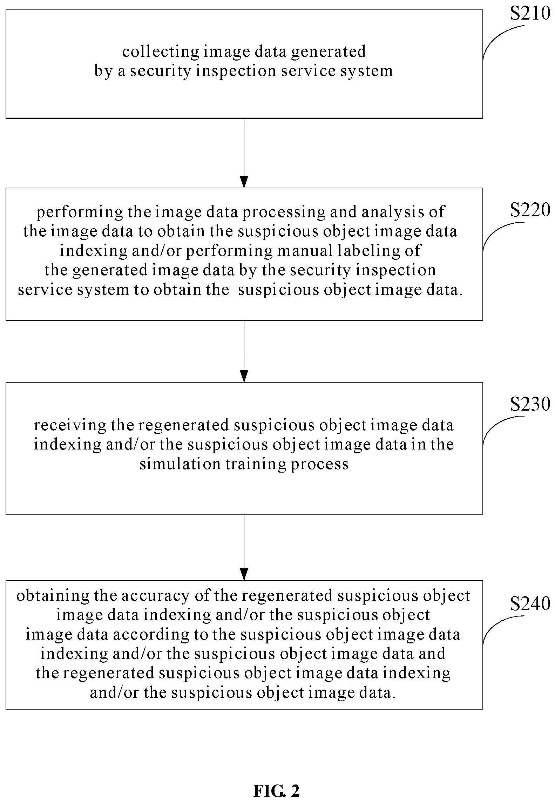

FIG. 2 shows a flowchart of a security inspection simulating training method according to an embodiment. In step S210 of the security inspection simulating training method, the image data generated by a security inspection service system is collected; the image data herein may be X-ray image data. In step S220, the image data processing and analysis is performed for the image data to obtain the suspicious object image data indexing and/or the suspicious object image data is obtained according to the manual labeling indexing of the generated image data by the security inspection service system; in step S230, receiving the regenerated suspicious object image data indexing and/or the suspicious object image data in the simulating training process; in step S240, obtaining the accuracy of the regenerated suspicious object image data indexing and/or the suspicious object image data according to the suspicious object image data indexing and/or the suspicious object image data and the regenerated suspicious object image data indexing and/or the suspicious object image data.

In one embodiment, the method can also include collecting the image data that is manually edited. In one example, the method can also include editing the image data generated by the security inspection service system to generate a new image data. In one example, the step of performing image data processing and analysis of the image data to obtain the suspicious object image data indexing and/or obtaining suspicious object image data according to manual labeling of the generated image data by the security inspection service system further includes obtaining the suspicious object image data indexing according to manual labeling of the generated image data by the security inspection service system. In one example, the method further includes adding associated identification to the accuracy of the regenerated suspicious object image data indexing and/or suspicious object image data obtained according to the suspicious object image data indexing and/or suspicious object image data and the regenerated suspicious object image data indexing and/or suspicious object image data. In one example, the method further includes querying and/or counting the accuracy based on the associated identification. It should be noted that the method corresponds to the apparatus, and the two have similar functions, and can solve similar technical problems. Therefore, the same or similar places are not described herein.

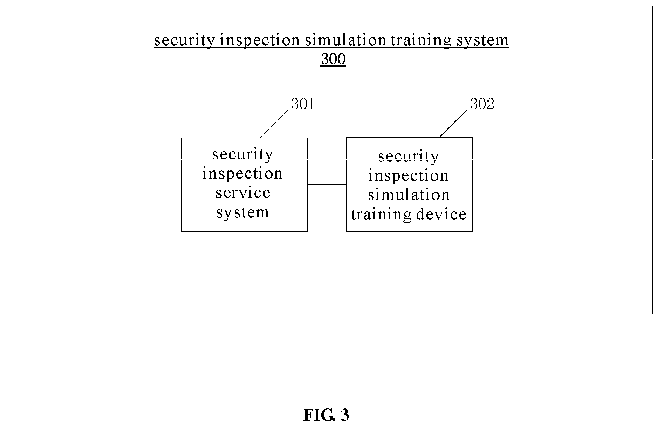

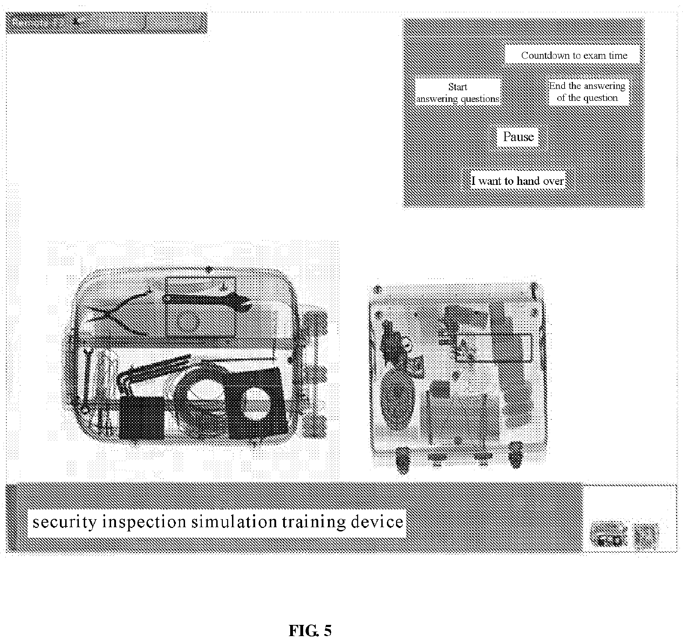

FIG. 3 shows a block diagram of a security inspection simulating training system. The security inspection simulating training system 300 includes a security inspection service system 301 and the above-described security inspection simulating training apparatus 302 which may be separated from the security inspection service system 301. FIG. 5 is a schematic diagram of a practical application interface of a security inspection simulating training system according to an embodiment. As can be seen in conjunction with FIG. 5, the security inspection simulating training apparatus 302 is connected to a security inspection service system 301. The security inspection simulating training apparatus 302 can exchange the information with security inspection service system 301 in multiple modes. The communication mode, by way of example and not limitation, may include network interface controllers (NIC) or network adapter for communicating with Ethernet or other wire-based networks or wireless NIC (WNIC), or a wireless adapter for communicating with a wireless network, such as a Wi-Fi network. Any suitable network for it and any suitable means of communication can also be considered. By way of example and not limitation, security inspection simulating training apparatus may be combined with one or more portions or two or more of a self-organizing network, a personal area network (PAN), a local area network (LAN), a wide area network (WAN), a metropolitan area network (MAN) or the Internet so as to communicate. A combination of more than one of these is communicated. One or more portions of one or more of these networks may be wired or wireless. For example, the security inspection simulating training apparatus 302 can be combined with a wireless PAN (WPAN) (eg, such as a Bluetooth WPAN), a Wi-Fi network, a Wi-MAX network, a cellular telephone network (eg, such as the Global System for Mobile Communications (GSM) Network) or other suitable wireless network or a combination of two or more of these so as to communicate. Through the above possible communication modes, the security inspection simulating training apparatus 302 can obtain the data such as various X-ray images generated by the security inspection service and the labeling made by the security inspector from the security inspection service system as training data and materials. In one example, the security inspection training teacher or the apparatus itself can also compose and synthesize the image material online or offline, generate new images, and make the security inspection training materials more diversified. In an example, the security inspection simulating training apparatus 302 can adopt the same operation interface as the security inspection terminal of the security inspection service system, so that the security inspection student can better adapt to the actual working environment during the training process; the security inspection simulating training apparatus 302 can automatically transmit the data generated in the security inspection simulating training apparatus 302 when the security inspection student is trained during the training process and store it in a local storage unit or stored in the storage unit of the security inspection simulating training system 300 or the security inspection service system 301, in an example, the security inspection simulating training system 300 records and automatically judges the student's scores, and can provide related functions such as query and statistics for the data.

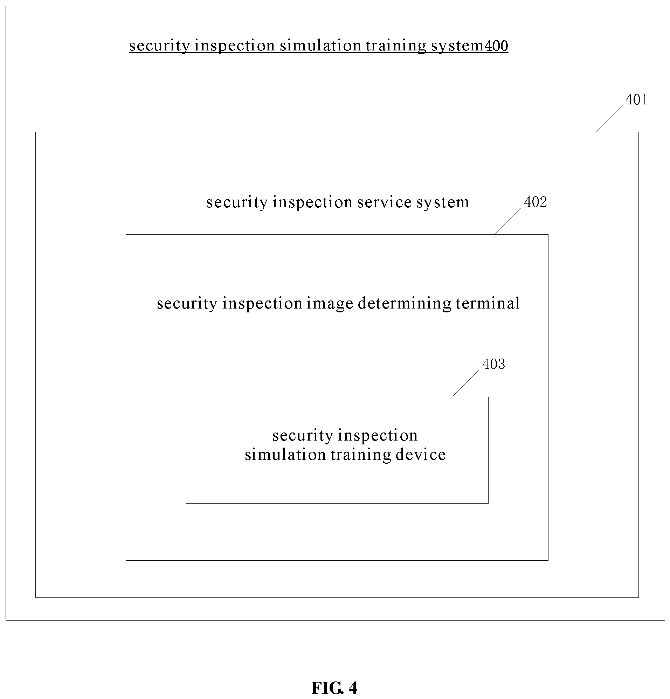

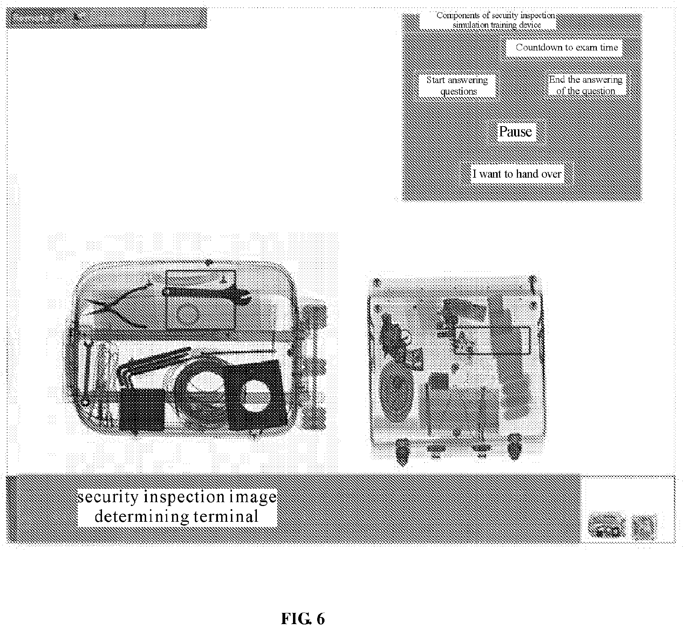

FIG. 4 shows a structural block diagram of a security inspection simulating training system 400 including a security inspection service system 401 and the above-described security inspection simulating training apparatus 403 which may also be installed in the security inspection terminal of a security inspection service system 401. FIG. 6 is a schematic diagram of a practical application interface of a security inspection simulating training system according to another embodiment. As can be seen in conjunction with FIG. 6, the security inspection simulating training apparatus 403 can exchange data with the security inspection service system 401, which mainly includes: obtaining the data such as various X-ray images generated in the security inspection service work and indexing made by security inspectors from the security inspection service system 401 as training data and materials; In one example, the security inspection training teacher or the apparatus itself can also compose and synthesize the image material online or offline, generate new images, and make the security inspection training materials more diversified. Here, the security inspection simulating training apparatus 403 can be regarded as a component of the security inspection terminal of the security inspection service system 401 to be placed in the security inspection terminal 402. The trained security inspection student can directly perform the operations of learning, practice and examination in the security inspection terminal 402 of the security inspection service system. The data generated during the training process can be saved in the storage device of the security inspection terminal 402, or can be automatically transmitted and stored in the storage device of the security inspection service system 401 or the security inspection simulating training system 400 by the security inspection simulating training apparatus 403, and is recorded and automatically evaluated by the security inspection simulating training system 400, and related functions such as query and statistics can be provided for the data.

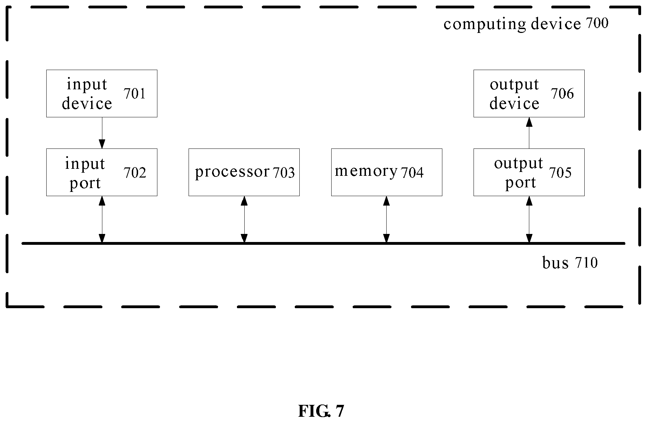

At least a portion of the security inspection simulating training method and security inspection simulating training apparatus described in connection with FIG. 1 and FIG. 2 can be implemented by a computing device. FIG. 7 shows a block diagram of a security inspection simulating training apparatus in accordance with an embodiment. As shown in FIG. 7, computing device 700 includes input device 701, input port 702, processor 703, memory 704, output port 705, and output device 706. The input port 702, the processor 703, the memory 704, and the output port 705 are connected to each other through a bus 710. The input device 701 and the output device 706 are connected to the bus 710 through the input port 702 and the output port 705, respectively, and further connected to the other components of the computing device 700. It should be noted that the output interface and input interface herein can also be represented by an I/O interface. Specifically, the input device 701 receives input information from the outside and transmits the input information to the processor 703 through the input port 702; the processor 703 processes the input information based on computer executable instructions stored in the memory 704 so as to generate output information. The output information is temporarily or permanently stored in the memory 704, and then the output information is transmitted to the output device 706 through the output port 705; the output device 706 outputs the output information to the outside of the computing device 700.

The above memory 704 includes a mass storage for data or instructions. By way of example and not limitation, the memory 704 can include a HDD, a floppy disk drive, a flash memory, an optical disk, a magneto-optical disk, a magnetic tape, or a universal serial bus (USB) drive, or a combination of two or more of the above. Memory 704 may include removable or non-removable (or fixed) media, where appropriate. Memory 704 can be internal or external to computing device 700, where appropriate. In a particular embodiment, memory 704 is a non-volatile solid state memory. In a particular embodiment, memory 704 includes a read only memory (ROM). Where appropriate, the ROM may be a mask programmed ROM, a programmable ROM (PROM), an erasable PROM (EPROM), an electrically erasable PROM (EEPROM), an electrically rewritable ROM (EAROM) or flash memory or A combination of two or more of the above.

Bus 710 includes hardware, software, or both and couples components of computing device 700 to each other. By way of example and not limitation, bus 710 may include an accelerated graphics port (AGP) or other graphics bus, an enhanced industry standard architecture (EISA) bus, a front side bus (FSB), a super transfer (HT) interconnect, an industry standard architecture (ISA) bus, Infinite Bandwidth Interconnect, Low Pin Count (LPC) bus, memory bus, Micro Channel Architecture (MCA) bus, Peripheral Component Interconnect (PCI) bus, PCI-Express (PCI-X) bus, Serial Advanced Technical Attachment (SATA) bus, Video Electronics Standards Association Local (VLB) bus or other suitable bus or a combination of two or more of the above. Bus 710 may include one or more buses 710, where appropriate. Although a particular bus is depicted and illustrated by embodiments of the present invention, the present invention contemplates any suitable bus or interconnect.

When the security inspection simulating training apparatus described in connection with FIG. 1 and FIG. 2 is implemented by the computing device 700 shown in FIG. 7, the input device 701 obtains image data of the detected object from the security inspection service system. In a particular embodiment, the I/O interface connected to the output device can include hardware, software, or both and provides one or more interfaces for communication between the computing device 700 and one or more I/O devices. Where appropriate, the computing device 700 can include one or more of these I/O devices. One or more of these I/O devices may allow communication between the person and computer system 400. By way of example and not limitation, I/O devices may include a keyboard, keypad, microphone, monitor, mouse, printer, scanner, speaker, still camera, stylus, tablet, touch screen, trackball, video camera, another suitable I/O device or a combination of two or more of the above. The I/O device can include one or more sensors. Embodiments of the present invention contemplate any suitable I/O device and any suitable I/O interface for them. Where appropriate, the I/O interface may include one or more devices or software drivers capable of allowing the processor 703 to drive one or more of these I/O devices. Where appropriate, the I/O interface can include one or more I/O interfaces. Although embodiments of the present invention describe and illustrate particular I/O interfaces, embodiments of the present invention contemplate any suitable I/O interface. In one example, the image data of the detected object may also be obtained by the above-described plurality of input devices or a combination of a plurality of devices. The processor 703 obtains the accuracy of the regenerated suspicious object image data indexing and/or suspicious object image data according to the suspicious object image data indexing and/or suspicious object image data and the regenerated suspicious object image data indexing and/or suspicious object image data based on computer executable instructions stored in the memory 704. The output is then performed directly to the actuator of the fan via output port 705 and output device 706.

That is, the security inspection simulating training apparatus according to an embodiment of the present invention may also be implemented to include a memory 704 storing computer executable instructions; and a processor 703 which may implement a combination of the security inspection simulating training method and the security inspection simulating training apparatus described in FIGS. 1 and 2 when executing computer executable instructions.

Where appropriate, computer-executable instructions may include one or more semiconductor-based or other integrated circuits (IC) (eg, such as field programmable gate arrays (FPGA) or application specific ICs (ASIC)), hard disk drive (HDD)), hybrid hard disk drive (HHD), optical disk, optical disk drive (ODD), magneto-optical disk, magneto-optical disk drive, floppy disk, floppy disk drive (FDD), magnetic tape, holographic storage media, solid state drive (SSD), RAM drive, secure digital card or drive or other suitable computer readable non-transitory storage medium or a combination of two or more of the above.

It is to be understood that the invention is not limited to the specific configurations and processes described above and illustrated in the drawings. Also, a detailed description of known method techniques is omitted herein for the sake of brevity. In the above embodiments, several specific steps have been described and illustrated as examples. However, the method of the present invention is not limited to the specific steps described and illustrated, and those skilled in the art can make various changes, modifications and additions, or change the order between the steps..

Those of ordinary skill in the art will appreciate that the elements and algorithm steps of the various examples described in connection with the embodiments disclosed herein can be implemented in electronic hardware, computer software, or a combination of both, in order to clearly illustrate hardware and software. Interchangeability, the composition and steps of the various examples have been generally described in terms of function in the above description. Whether these functions are performed in hardware or software depends on the specific application and design constraints of the solution. A person skilled in the art can use different methods for implementing the described functions for each particular application, but such implementation should not be considered to be beyond the scope of the present invention.

A person skilled in the art can clearly understand that, for the convenience and brevity of the description, the specific working process of the system, the device and the unit described above can refer to the corresponding process in the foregoing method embodiment, and details are not described herein again.

In the several embodiments provided by the present application, it should be understood that the disclosed systems, apparatus, and methods may be implemented in other manners. For example, the apparatus embodiments described above are merely illustrative. For example, the division of the unit is only a logical function division. In actual implementation, there may be another division manner, for example, multiple units or components may be combined or can be integrated into another system, or some features can be ignored or not executed. In addition, the mutual coupling or direct coupling or communication connection shown or discussed may be an indirect coupling or communication connection through some ports, devices or units, or an electrical, mechanical or other form of connection.

The units described as separate components may or may not be physically separated, and the components displayed as units may or may not be physical units, that is, may be located in one place, or may be distributed to multiple network units. Some or all of the units may be selected according to actual needs to achieve the objectives of the embodiments of the present invention.

In addition, each functional unit in each embodiment of the present invention may be integrated into one processing unit, or each unit may exist physically separately, or two or more units may be integrated into one unit. The above integrated unit can be implemented in the form of hardware or in the form of a software functional unit.

The above is only the specific embodiment of the present invention, but the scope of the present invention is not limited thereto, and any equivalent person can be easily conceived within the technical scope of the present invention by any person skilled in the art. Modifications or substitutions are intended to be included within the scope of the invention. Therefore, the scope of the invention should be determined by the scope of the claims.

## Claims

1. A security inspection simulating training apparatus including:
a collecting unit configured to collect image data generated by a security inspection service system;
a processing unit configured to perform image data processing and analysis for the image data to obtain suspicious object image data indexing and/or obtain suspicious object image data according to manual labeling of the generated image data by the security inspection service system;
a receiving unit configured to receive suspicious object image data indexing and/or suspicious object image data regenerated in the simulating training process; and
an analyzing unit configured to obtain the accuracy of the regenerated suspicious object image data indexing and/or suspicious object image data according to the suspicious object image data indexing and/or suspicious object image data and the regenerated suspicious object image data indexing and/or suspicious object image data.

2. The apparatus of claim 1 wherein the collecting unit is further configured to collect the image data which is manually edited.

3. The apparatus of claim 1, further comprising a pre-processing unit configured to edit image data generated by the security inspection service system to generate new image data.

4. The apparatus of claim 1, wherein the processing unit is further configured to obtain a suspicious object image data indexing according to the manual labeling of the generated image data by the security inspection service system.

5. The apparatus of claim 1, further comprising an associated identification generating unit configured to add an associated identification to the accuracy obtained by the analysis unit.

6. The apparatus of claim 5, further comprising a query and/or statistics unit configured to query and/or count the accuracy obtained by the analysis unit based on the associated identification.

7. The apparatus according to any one of claims 1 to 7, wherein the image data is X-ray image data.

8. A security inspection simulating training method, including:
collecting image data generated by security inspection service system;
performing image data processing and analysis for the image data to obtain suspicious object image data indexing and/or obtaining suspicious object image data according to manual labeling of the generated image data by the security inspection service system;
receiving suspicious object image data indexing and/or suspicious object image data regenerated in the simulating training process; and
obtaining the accuracy of the regenerated suspicious object image data indexing and/or suspicious object image data according to the suspicious object image data indexing and/or suspicious object image data and the regenerated suspicious object image data indexing and/or suspicious object image data.

9. The method of claim 8 further comprising collecting the image data which is manually edited.

10. The method of claim 8 further comprising editing the image data generated by the security inspection service system to generate new image data.

11. The method according to claim 8, wherein the step of performing image data processing and analysis for the image data to obtain suspicious object image data indexing and/or obtaining suspicious object image data according to manual labeling of the generated image data by the security inspection service system further comprises obtaining the suspicious object image data indexing according to the manual labeling of the generated image data by the security inspection service system.

12. The method of claim 8, further comprising add an associated identification to the accuracy of the regenerated suspicious object image data index and/or suspicious object image data obtained according to the suspicious object image data indexing and/or suspicious object image data and the regenerated suspicious object image data indexing and/or suspicious object image data.

13. The method of claim 12 wherein the accuracy is queried and/or counted according to the associated identification.

14. The method according to any one of claims 1 to 7, wherein the image data is X-ray image data.

15. A security inspection simulating training apparatus, including:
a memory that stores computer executable instructions;
a processor for executing the program stored in the memory, the program causing the processor to execute any of the security inspection simulating training methods of claim 7 to claim 12;
input device;
output device
I/O interface; and
a bus for communicating information between the processor, the memory, the input device, the output device, and the I/O interface.

16. A security inspection simulating training system, comprising a security inspection service system and a security inspection simulating training apparatus according to any one of claims 1 to 7, wherein the security inspection simulating training apparatus is installed in a security inspection terminal of the security inspection service system or is separated from the security inspection terminal.
